(19) Europäisches Patentamt
European Patent Office
Office européen des brevets

(11) **EP 4 305 556 B1**

(12) **EUROPEAN PATENT SPECIFICATION**

(45) Date of publication and mention of the grant of the patent:
**03.12.2025 Bulletin 2025/49**

(21) Application number: **22733893.6**

(22) Date of filing: **27.05.2022**

(51) International Patent Classification (IPC):
**G06N 3/006** (2023.01)   **G06N 3/092** (2023.01)
**G06N 20/20** (2019.01)   **G06N 3/047** (2023.01)
**G06N 3/088** (2023.01)

(52) Cooperative Patent Classification (CPC):
**G06N 3/006; G06N 3/047; G06N 3/088; G06N 3/09; G06N 3/092; G06N 20/20**

(86) International application number:
**PCT/EP2022/064499**

(87) International publication number:
**WO 2022/248725 (01.12.2022 Gazette 2022/48)**

(54) **REINFORCEMENT LEARNING USING AN ENSEMBLE OF DISCRIMINATOR MODELS**

VERSTÄRKUNGSLERNEN UNTER VERWENDUNG EINER ANORDNUNG VON DISKRIMINATORMODELLEN

APPRENTISSAGE PAR RENFORCEMENT UTILISANT UN ENSEMBLE DE MODÈLES DE DISCRIMINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.05.2021 US 202163194798 P**

(43) Date of publication of application:
**17.01.2024 Bulletin 2024/03**

(73) Proprietor: **GDM Holding LLC Mountain View, CA 94043 (US)**

(72) Inventors:
 • **HANSEN, Steven Stenberg London N1C 4AG (GB)**
 • **STROUSE, Daniel Joseph London N1C 4AG (GB)**

(74) Representative: **Marks & Clerk GST 1 New York Street Manchester M1 4HD (GB)**

(56) References cited:
**WO-A1-2019/222745**

 • **ANNIE S CHEN ET AL: "Batch Exploration with Examples for Scalable Robotic Reinforcement Learning", ARXIV.ORG, CORNELL UNIVERSITY LIBRARY, 201 OLIN LIBRARY CORNELL UNIVERSITY ITHACA, NY 14853, 23 April 2021 (2021-04-23), XP081925725, DOI: 10.1109/LRA.2021.3068655**
 • **RAMANAN SEKAR ET AL: "Planning to Explore via Self-Supervised World Models", ARXIV.ORG, CORNELL UNIVERSITY LIBRARY, 201 OLIN LIBRARY CORNELL UNIVERSITY ITHACA, NY 14853, 1 July 2020 (2020-07-01), XP081711113**
 • **DJ STROUSE ET AL: "Learning more skills through optimistic exploration", ARXIV.ORG, CORNELL UNIVERSITY LIBRARY, 201 OLIN LIBRARY CORNELL UNIVERSITY ITHACA, NY 14853, 12 May 2022 (2022-05-12), XP091214201**

**Description**

BACKGROUND

This specification relates to processing data using machine learning models.

Machine learning models receive an input and generate an output, e.g., a predicted output, based on the received input. Some machine learning models are parametric models and generate the output based on the received input and on values of the parameters of the model.

Some machine learning models are deep models that employ multiple layers of models to generate an output for a received input. For example, a deep neural network is a deep machine learning model that includes an output layer and one or more hidden layers that each apply a non-linear transformation to a received input to generate an output.

Annie S. Chen "Batch Exploration with Examples for Scalable Robotic Reinforcement Learning" Cornell University Library, 201 Olin Library Cornell University Ithaca, 23 April 2021, discloses an exploration technique for training general purpose robotic agents, Batch Exploration with Examples (BEE), that explores relevant regions of the state-space, guided by a modest number of human-provided images of important states.

SUMMARY

The invention is defined by the independent claims. Preferred embodiments are defined by the dependent claims. This specification generally describes a system implemented as computer programs on one or more computers in one or more locations that trains an action selection neural network that is used to select actions to be performed by an agent interacting with an environment.

The system described herein can train the action selection neural network even in the absence of "task rewards," e.g., extrinsic rewards that characterize a progress of an agent towards accomplishing a task in the environment.

For example, the system can initially train the action selection neural network using reinforcement learning techniques based on only "unsupervised" rewards generated by an ensemble of discriminator models. After pre-training the action selection neural network using unsupervised rewards, the system can train the action selection neural network based on task rewards, or based on a combination of task rewards and unsupervised rewards.

The system can train the action selection neural network using any appropriate reinforcement learning technique, e.g., a Q learning technique or a policy gradient technique.

The subject matter described in this specification can be implemented in particular embodiments so as to realize one or more of the following advantages.

The system described in this specification can train an action selection neural network using "unsupervised" rewards, generated using an ensemble of discriminator models, as an alternative to or in combination with training the action selection neural network using "task" rewards. To train the action selection neural network using unsupervised rewards, the system can sample a latent, and then select actions to be performed by the agent to interact with the environment over a sequence of time steps while the action selection neural network is conditioned on the sampled latent. An unsupervised reward may differ from an extrinsic (e.g. task) reward for instance by not being received externally (e.g. received from the environment). For instance, an unsupervised (or intrinsic) reward may instead be a reward that is determined by the system based on observations of the environment after actions have been performed. The unsupervised rewards may also be based on latents used by the system to condition the selection of actions.

The system can determine unsupervised rewards based in part on how accurately the discriminator models can predict the latent the action selection neural network is conditioned on based on the states the environment transitions into during the interaction of the agent with the environment. Training the action selection neural network on these unsupervised rewards can enable the action selection neural network to learn "skills" that result in the state of the environment being altered in a consistent and recognizable way. A skill refers to an action selection policy defined by conditioning the action selection neural network on a latent.

The action selection neural network can leverage a diverse set of consistent and recognizable skills that are learned using the unsupervised rewards to learn to perform tasks in the environment more rapidly, e.g., using less training data and over fewer training iterations. However, determining the unsupervised rewards based on how accurately the discriminator models can predict the latent on which the action selection neural network is conditioned can discourage exploration of the environment. In particular, as the agent explores new parts of the environment, the prediction accuracy of the discriminator models can degrade (as they have not been trained on observations from the new parts of the environment), and thus rewards based on the prediction accuracy of the discriminator models can decrease. Discouraging exploration of the environment by the agent can limit the ability of the agent to learn how to effectively perform tasks in the environment.

To encourage exploration, the system described herein uses an ensemble of discriminator models, e.g., that are each trained on independently sampled batches of training examples, and generates the unsupervised reward based at least in part on a measure of disagreement between the predictions generated by the discriminator models. As the agent explores new parts of the environment, the predictions generated by the discriminator models tend to disagree, thereby tending to increase the value of the unsupervised rewards and encouraging exploration. By determining the unsupervised rewards based on a measure of disagreement between the discriminator models, the system can encourage the agent to explore the environment and thus enable the agent to learn to perform tasks in the environment more effectively, e.g., using less training data and over fewer training iterations. In contrast, systems that use a single discriminator model cannot leverage the disagreement of discriminator models as a mechanism for encouraging exploration, and thus these systems may perform less effectively than the system described in this specification.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is a block diagram of an example action selection system that includes an ensemble of discriminator models.
FIG. 2 illustrates example techniques for determining a measure of disagreement between prediction outputs generated by an ensemble of discriminator models..
FIG. 3 is a flow diagram of an example process for training an action selection neural network.
FIG. 4A and FIG. 4B illustrate example experimental results achieved using an action selection system.

Like reference numbers and designations in the various drawings indicate like elements.

DETAILED DESCRIPTION

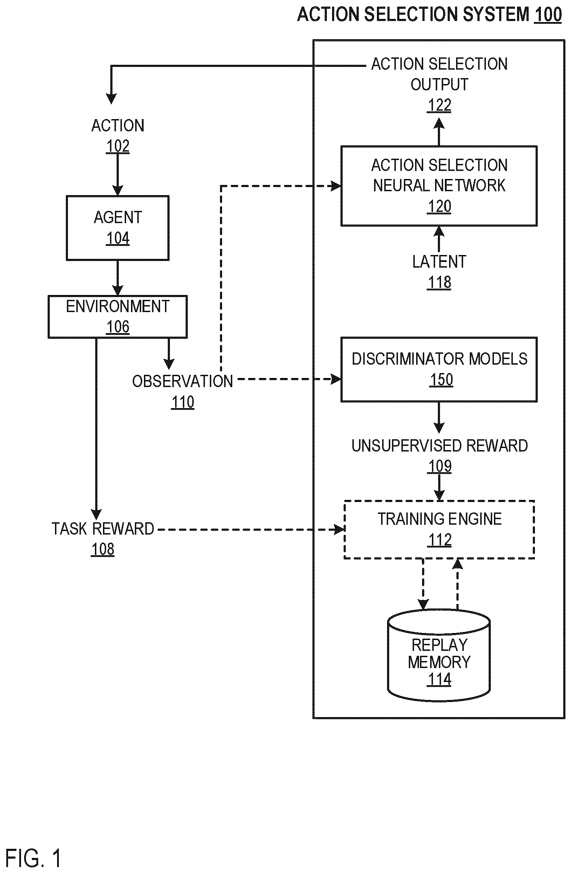

FIG. 1 shows an example action selection system 100 that can control an agent 104 interacting with an environment 106. The action selection system 100 is an example of a system implemented as computer programs on one or more computers in one or more locations in which the systems, components, and techniques described below are implemented.

The system 100 can select actions 102 to be performed by the agent 104 to interact with the environment 106 over a sequence of time steps to accomplish a goal. At each time step, the system 100 receives data characterizing the current state of the environment 106 and selects an action 102 to be performed by the agent 104 in response to the received data. Data characterizing a state of the environment 106 will be referred to in this specification as an observation 110 and can include, e.g., an image, or any other appropriate data. In some cases, the agent 104 can be, e.g., a robot, and the observation 110 can include, e.g., joint positions, velocities and torques, or any other appropriate data, as described in more detail below. At each time step, the state of the environment 106 at the time step (as characterized by the observation 110) depends on the state of the environment 106 at the previous time step and the action 102 performed by the agent 104 at the previous time step.

The system 100 selects actions 102 to be performed by the agent 104 to interact with the environment 106 over a sequence of time steps using an action selection neural network 120 conditioned on a latent variable 118. The system 100 samples (e.g., randomly) the latent variable 118 from a set of possible latent variables and conditions the action selection neural network 120 on the latent variable 118. Then, the system 100 uses the action selection neural network 120, conditioned on the latent variable 118, to select actions 102 to be performed by the agent 104 over a sequence of time steps. Generally, "conditioning" the action selection neural network 120 on the latent variable 118 can refer to providing the latent variable 118 to the action selection neural network 120 as an input. In some implementations, the set of possible latent variables can include only finitely many possible latent variables, e.g., 10, 100, 1000, 10,000, or any other appropriate number of latent variables. In some implementations, the set of possible latent variables can include infinitely many possible latent variables, e.g., the set of possible latent variables can be the continuous range [0, 1].

Each latent variable can represent a "skill," e.g., a set of actions that characterize a behavior of the agent 104 over a sequence of time steps. That is, each latent variable can prompt the agent 104 to interact with the environment 106 in a manner that causes the state of the environment 106 to be altered over a sequence of time steps in a consistent and recognizable way. In other words, a "skill" can refer to an action selection policy defined by conditioning the action selection neural network 120 on the latent variable 118. For example, a skill can refer to an action selection policy $\pi_\theta(a \mid s, z)$ that maps from states $s$ and latent variables $z$ to distributions over actions $a$, where $\theta$ is a set of parameters of the action selection neural network 120. As described in more detail below, by training the action selection neural network 120 on unsupervised rewards 109, the system 100 can enable the action selection neural network 120 to learn distinct and recognizable skills.

As a particular example, if the agent 104 is a physical robot having a robotic arm, a first latent variable can define a first set of possible actions of the robot that include the actions of moving forward, backward, to the left, and to the right. A second latent variable can define a second set of possible actions of the robot that include the action of moving the robotic arm forward, backward, to the left, and to the right. In this case, the first latent variable and the second latent variable can each represent a distinct and recognizable skill of the robot.

After conditioning the action selection neural network 120 on the latent variable 118, the system 100 uses the action selection neural network 120 to select actions 102 to be performed by the agent 104 to interact with the environment 106 over a sequence of time steps. For example, at each time step, the system 100 processes the observation 110 characterizing the current state of the environment 106 at the time step, and the latent variable 118, using the action selection neural network 120, to generate an action selection output 122. In some implementations, in addition to processing the observation 110 characterizing the current state of the environment 106 at the time step, the system 100 can also process one or more observations that each characterize the state of the environment at a respective previous time step.

The action selection output 122 can include a respective score for each action in a set of possible actions that can be performed by the agent 104. In some implementations, the system 100 can select the action having the highest score, according to the action selection output 122, as the action to be performed by the agent 104 at the time step. In some implementations, the system 100 selects the action 102 to be performed by the agent 104 in accordance with an exploration strategy. For example, the system 100 can use an ε-greedy exploration strategy. In this example, the system 100 can select the action having a highest score (according to the action selection output 122) with probability 1-ε, and select an action randomly with probability ε, where ε is a number between 0 and 1.

After the system 100 selects the action 102 to be performed by the agent 104 at the time step, the agent 104 interacts with the environment 106 by performing that action 102, and the system 100 receives a reward based on the interaction, e.g., a task reward 108, an unsupervised reward 109, or both.

For example, at each time step, the system 100 receives the task reward 108 based on the current state of the environment 106 and the action 102 of the agent 104 at the time step. Generally, the task reward 108 can be represented as a numerical value. The task reward 108 can be based on any event in or aspect of the environment 106. For example, the task reward 108 can indicate whether the agent 104 has accomplished a task (e.g., physically manipulating objects in the environment in a desired way) or the progress of the agent 104 towards accomplishing the task.

Additionally, the system 100 receives the unsupervised reward 109. The system 100 determines a respective unsupervised reward 109 for each of one or more time steps using an ensemble of multiple discriminator models 150. Each discriminator model in the ensemble 150 is configured to process the observation 110 characterizing the current state of the environment 106 and generate a respective prediction output that predicts which latent variable 118 the action selection neural network 120 was conditioned on to cause the environment 106 to enter the state characterized by the observation 110. In other words, each discriminator model generates a prediction regarding which skill the action selection neural network 120 used to generate the action selection output 122.

The prediction output of a discriminator model can include a score distribution over the set of possible latent variables that defines a respective score for each latent variable in the set of possible latent variables. For example, at the time step t, a discriminator model $i$ with a set of parameters $\phi i$, can process the observation $o_t$ characterizing the current state of the environment 106 to generate the score distribution $q_{\varphi i}(z_t | o_t)$ over the set of possible latent variables $z_t$.

Generally, the input processed by a discriminator model at a time step includes representations of: (i) the observation at the time step, and optionally, (ii) observations for one or more preceding time steps. In some cases, a discriminator model can directly process observations. In other cases, a discriminator model can process feature representations of observations, e.g., that are generated by processing the observations using an encoder subnetwork of an autoencoder neural network.

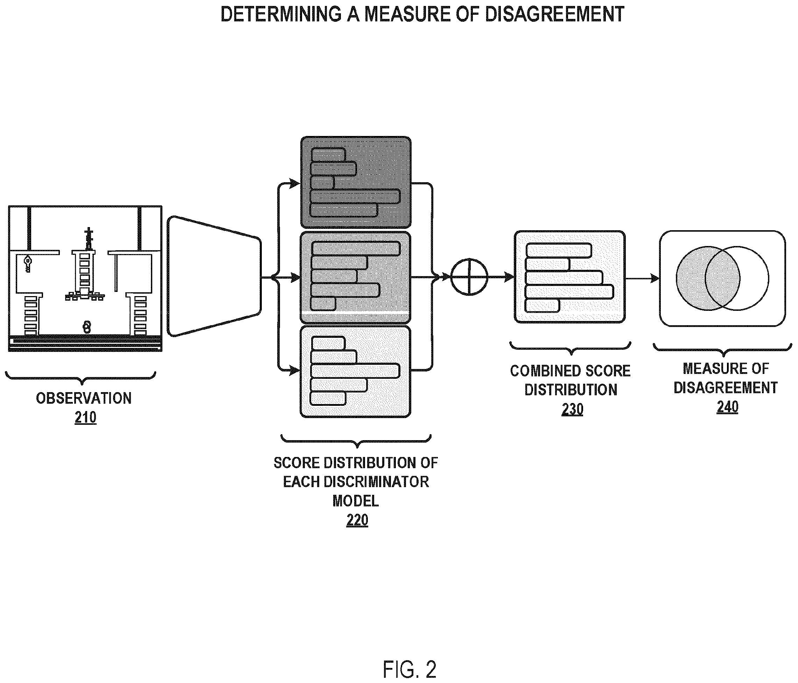

As described in more detail below with reference to FIG. 2, the system 100 uses the prediction outputs of the discriminator models 150 to determine the unsupervised reward 109 for the time step. At each of one or more time steps, the system 100 determines a measure of disagreement between the prediction outputs generated by the ensemble of multiple discriminator models 150, and determines the unsupervised reward 109 based on the measure of disagreement. (A "measure of disagreement" between prediction outputs generated by the ensemble of discriminator models refers to a measure of dissimilarity between the prediction outputs generated by the ensemble of discriminator models. A few examples of measures of disagreement are described in more detail below). In some implementations, the system 100 can additionally determine the unsupervised reward based on an accuracy of the prediction outputs generated by the discriminator models. The accuracy can reflect, e.g., an effective number of skills that the action selection neural network 120 has learned at the time step. As a particular example, the unsupervised reward r at the time step can be represented as:

$$r = r_{skill} + \lambda r_{DIS} \qquad (1)$$

where $r_{skill}$ is a reward term that characterizes an accuracy of the prediction outputs generated by the ensemble of discriminator models at the time step, $r_{DIS}$ is a reward term that is based on a measure of disagreement between the prediction outputs generated by the ensemble of discriminator models 150 at the time step, and $\lambda$ is a tunable weight factor. The reward term $r_{skill}$ can take the form, e.g.:

$$r_{skill} = logq_\phi(z_t \,|o_t) - logp(z_t) \qquad (2)$$

where $q_\phi(z_t|o_t)$ is the average score that the ensemble of discriminator models predict for the latent variable 118 that the action selection neural network 120 was conditioned on (e.g., the correct latent variable). In other words, $q_\phi(z_t\,|o_t)$ represents (characterizes) an accuracy of the prediction outputs generated by the ensemble of discriminator models 150.

In equation (2), $p(z_t)$ is a prior score distribution over the set of possible latent variables $z_t$ at the time step. In some implementations, the system 100 can sample the latent variable 118 in accordance with the prior score distribution $p(z_t)$. For example, if the prior score distribution over the set of latent variables is uniform, then the system 100 can sample latent variables with equal probability.

In some implementations, the prior score distribution over the set of latent variables $p(z_t)$ is fixed to be uniform with a total of $N$ skills. In such cases, if the discriminator model generates a prediction output that uniformly predicts the latent that the action selection neural network 120 was conditioned on, then $logq\phi(z_t\,|o_t)$ = $-logN$, resulting in $r_{skill}$ = 0. This can indicate that the estimated number of skills that the action selection neural network 120 has learned is low, or negligible, corresponding to a low, or negligible, reward. If, on the other hand, the discriminator model accurately predicts the latent that the action selection neural network 120 was conditioned on, then $log\,q_\phi(z_t\,|o_t)$ = 0, resulting in $r_{skill}$ = $logN.$ This can indicate that the estimated number of skills learned is relatively high, resulting in a high reward.

As described above, the system 100 generates the unsupervised reward also based on the measure of disagreement between the prediction outputs generated by the ensemble of discriminator models 150, e.g., by determining $r_{DIS}$ in equation (1) above. This process is described in more detail below with reference to FIG. 2.

Generally, a high measure of disagreement between the predictions generated by the discriminator models 150 can indicate that the agent 104 has encountered a "new" state of the environment 106 at the time step, e.g., a part of the environment 106 that it is unlikely to have visited previously. In other words, a high measure of disagreement can indicate that the discriminator models substantially disagree regarding which latent variable 118 the action selection neural network 120 was conditioned on to cause the state of the environment to be altered to the state characterized by the observation 110 at the time step. In order to encourage exploration of different parts of the environment 106, the system 100 can accordingly select actions that result in an increased value of $r_{DIS}$ in equation (1) above, thereby rewarding the action selection neural network 120 for encountering the new state of the environment 106.

By contrast, a low measure of disagreement can indicate that some, or all, of the discriminator models 150 agree on their predictions, thereby indicating that there is a relatively high likelihood that the agent 104 has previously visited the part of the environment 106 represented by the observation 110 at the time step. In such cases, the system 100 can generate a relatively low value of $r_{DIS}$ in equation (1) above. By generating unsupervised rewards 109 according to equation (1) and training the action selection neural network 120 on the unsupervised rewards 109, the system 100 can encourage the action selection neural network 120 to learn more distinguishable and recognizable skills, and explore new states of the environment 106.

As described above, in addition to receiving the unsupervised reward 109, the system also receives a task reward 108 that characterizes the progress of the agent 104 towards achieving a goal. For example, if the agent 104 accomplishes a task at a time step, then the task reward can be a positive value (e.g., 1). Otherwise, the reward can be zero. In some implementations, at each time step, the action selection system 100 can further determine an overall reward based on the task reward 108 and the unsupervised reward 109. The overall reward for the time step can be, e.g., a linear combination of the task reward 108 and the unsupervised reward 109. In some implementations, the system 100 can generate the unsupervised reward 109 at each time step in a sequence of time steps, or only at one or more time steps in the sequence of time steps. For example, the system 100 can generate the unsupervised reward 109 only at a final time step, e.g., at the end of an episode, where an "episode" refers to a sequence of time steps where the action selection neural network 120 is conditioned on the same latent variable 118.

The action selection neural network 120 can have any appropriate neural network architecture that enables it to perform its described functions, e.g., processing a latent 118 and an observation 110 to generate an action selection output 122 that characterizes an action 102 to be performed by the agent 103 in response to the observation 110. For example, the action selection neural network 120 can include any appropriate number of layers (e.g., 5 layers, 10 layers, or 25 layers) of any appropriate type (e.g., fully connected layers, convolutional layers, attention layers, transformer layers, etc.) and connected in any appropriate configuration (e.g., as a linear sequence of layers).

Each discriminator model in the ensemble of discriminator models 150 can have any appropriate machine learning model architecture, e.g., a neural network architecture, a support vector machine architecture, or a random forest architecture. In some implementations, each discriminator model shares the same architecture (e.g., the same neural network architecture), but the respective values of the discriminator model parameters are different for each discriminator model, e.g., as a result of being trained on independently sampled batches of training examples, or as a result of having differently initialized parameter values. The ensemble of multiple discriminator models 150 can include any appropriate number of discriminator models, e.g., 2, 10, 100, 1000, or any other appropriate number of discriminator models.

A training engine 112 trains the action selection neural network 120 based on the unsupervised rewards 109, described above with reference to equation (1), using reinforcement learning techniques. The training engine 112 trains the action selection neural network 120 by iteratively adjusting the parameters of the action selection neural network 120. The training engine 112 can adjust the parameters of the action selection neural network 120 by iteratively backpropagating gradients of a reinforcement learning objective function (e.g., a Q learning objective function, a policy gradient objective function, or any other appropriate reinforcement learning objective function) through the action selection neural network 120. By training the action selection neural network 120, the training engine 112 can cause the action selection neural network 120 to select actions that increase a cumulative measure of the unsupervised reward 109 (e.g., a long-term time-discounted cumulative overall reward) received by the action selection neural network 120. In some implementations, the training engine 112 can train the action selection neural network 112 based on the overall reward, e.g., a combination of the unsupervised reward 109 and the task reward 108, using reinforcement learning techniques described above.

Furthermore, the training engine 112 can train the ensemble of multiple discriminator models 150 using any appropriate training technique, e.g., a supervised learning technique. Each discriminator model in the ensemble of multiple discriminator models 150 can have a respective set of discriminator model parameters. In some implementations, the training engine 112 can initialize the respective values of the respective set of discriminator model parameters to be different for each discriminator model in the ensemble 150. For example, the training engine 112 can initialize the parameters by randomly sampling each parameter from a distribution, e.g., a standard Normal distribution.

In some implementations, the training engine 112 can train the ensemble of discriminator models 150 using training examples stored in a replay memory 114. The replay memory 114 can be implemented as, e.g., as a logical data storage area or physical data storage device. The replay memory 114 can store a respective "experience tuple" corresponding to each of multiple previous time steps (e.g., the memory 114 can store a respective experience tuple for each time step before the current time step). An experience tuple for a time step refers to data that characterizes the interaction of the agent 104 with the environment 106 at the previous time step. For example, an experience tuple for a previous time step can include: (i) a training observation 110 characterizing a state of the environment 106 during a previous interaction of the agent 104 with the environment 106, and (ii) a target output that defines a latent variable 118 that the action selection neural network 120 was conditioned on to cause the environment 106 to enter the state characterized by the observation 110.

At each training iteration, the training engine 112 can sample a batch of training examples from the replay memory 114, and process the training inputs specified by the training examples using the ensemble of discriminator models 150. In some implementations, the training engine 112 can train each discriminator model in the ensemble 150 on an independently sampled batch of training examples, e.g., the training engine 112 can independently sample a respective batch of training examples from the replay memory 114 and provide the training inputs specified by each batch to a respective discriminator model.

Each discriminator model processes a respective training observation specified by a respective training example in accordance with the respective set of discriminator model parameters to generate a corresponding prediction output that includes a respective score distribution over the set of possible latent variables.

For each discriminator model, the training engine 112 can determine gradients of an objective function with respect to the respective discriminator model parameters. The objective function can measure an error, e.g., a cross-entropy error, between: (i) the score distribution defined by a prediction output, and (ii) the target output that defines the latent variable 118 that the action selection neural network 120 was conditioned on. As a particular example, the training engine 112 can train the discriminator model parameters $\phi$ of each discriminator model by minimizing the objective function:

$$L(\phi) = -\mathbb{E}[log q_{\varphi}(z \mid o(\tau)] \qquad (3)$$

where $q_{\varphi}(z \mid o(\tau))$ is the score distribution over the set of possible latent variables generated by the discriminator model. For each discriminator model, the training engine 112 can determine gradients of the objective function with respect to the discriminator model parameters, e.g., using backpropagation techniques. The training engine 112 can use the gradients to update the discriminator model parameters using the update rule of a gradient descent optimization algorithm, e.g., Adam or RMSprop.

After training the action selection neural network 120, the ensemble of discriminator models 150, or both, the system 100 uses the action selection neural network 120 to select actions 102 to be performed by the agent 104 to interact with the environment 106.

Examples of possible agents, environments, and tasks, are described in more detail next.

In some implementations, the environment is a real-world environment and the agent is a mechanical agent interacting with the real-world environment. For example, the agent may be a robot interacting with the environment to accomplish a goal (or task), e.g., to locate an object of interest in the environment, to move an object of interest to a specified location in the environment, to physically manipulate an object of interest in the environment in a specified way, or to navigate to a specified destination in the environment; or the agent may be an autonomous or semi-autonomous land, air, or sea vehicle navigating through the environment to a specified destination in the environment.

In these implementations, the observations may include, for example, one or more of images, object position data, and sensor data to capture observations as the agent interacts with the environment, for example sensor data from an image, distance, or position sensor or from an actuator.

For example in the case of a robot the observations may include data characterizing the current state of the robot, e.g., one or more of: joint position, joint velocity, joint force, torque or acceleration, for example gravity-compensated torque feedback, and global or relative pose of an item held by the robot.

In the case of a robot or other mechanical agent or vehicle the observations may similarly include one or more of the position, linear or angular velocity, force, torque or acceleration, and global or relative pose of one or more parts of the agent. The observations may be defined in 1, 2 or 3 dimensions, and may be absolute and/or relative observations.

The observations may also include, for example, data obtained by one of more sensor devices which sense a real-world environment; for example, sensed electronic signals such as motor current or a temperature signal; and/or image or video data for example from a camera or a LIDAR sensor, e.g., data from sensors of the agent or data from sensors that are located separately from the agent in the environment.

In the case of an electronic agent the observations may include data from one or more sensors monitoring part of a plant or service facility such as current, voltage, power, temperature and other sensors and/or electronic signals representing the functioning of electronic and/or mechanical items of equipment. The electronic agent generates actions that control, e.g., machines in an industrial facility, or cooling systems in a data center.

The actions may be control signals to control a robot or other mechanical agent, e.g., torques for the joints of the robot or higher-level control commands, or the autonomous or semi-autonomous land or air or sea vehicle, e.g., torques to the control surface or other control elements of the vehicle or higher-level control commands.

The control signals can include for example, position, velocity, or force/torque/acceleration data for one or more joints of a robot or parts of another mechanical agent. The control signals may also or instead include electronic control data such as motor control data, or more generally data for controlling one or more electronic devices within the environment the control of which has an effect on the observed state of the environment. For example in the case of an autonomous or semi-autonomous land, air, or sea vehicle the control signals may define actions to control navigation e.g. steering, and movement e.g., braking and/or acceleration of the vehicle.

In some unclaimed implementations the environment is a simulated environment and the agent is implemented as one or more computers interacting with the simulated environment. In some unclaimed implementations the environment is a simulation of the above-described real-world environment. For example the simulated environment may be a simulation of a robot or vehicle and the reinforcement learning system may be trained on the simulation and then, once trained, used in the real-world.

For example, the simulated environment may be a motion simulation environment, e.g., a driving simulation or a flight simulation, and the agent may be a simulated vehicle navigating through the motion simulation. **In** these unclaimed implementations, the actions may be control inputs to control the simulated user or simulated vehicle.

In another example, the simulated environment may be a video game and the agent may be a simulated user playing the video game.

In some implementations the environment is a real-world manufacturing environment for manufacturing a product, such as a chemical, biological, or mechanical product, or a food product. As used herein a "manufacturing" a product also includes refining a starting material to create a product, or treating a starting material e.g. to remove pollutants, to generate a cleaned or recycled product. The manufacturing plant may comprise a plurality of manufacturing units such as vessels for chemical or biological substances, or machines, e.g. robots, for processing solid or other materials. The manufacturing units are configured such that an intermediate version or component of the product is moveable between the manufacturing units during manufacture of the product, e.g. via pipes or mechanical conveyance. As used herein manufacture of a product also includes manufacture of a food product by a kitchen robot.

The agent may comprise an electronic agent configured to control a manufacturing unit, or a machine such as a robot, that operates to manufacture the product. That is, the agent may comprise a control system configured to control the manufacture of the chemical, biological, or mechanical product. For example the control system may be configured to control one or more of the manufacturing units or machines or to control movement of an intermediate version or component of the product between the manufacturing units or machines.

**EP 4 305 556 B1**

As one example, a task performed by the agent may comprise a task to manufacture the product or an intermediate version or component thereof. As another example, a task performed by the agent may comprise a task to control, e.g. minimize, use of a resource such as a task to control electrical power consumption, or water consumption, or the consumption of any material or consumable used in the manufacturing process.

The actions may comprise control actions to control the use of a machine or a manufacturing unit for processing a solid or liquid material to manufacture the product, or an intermediate or component thereof, or to control movement of an intermediate version or component of the product within the manufacturing environment e.g. between the manufacturing units or machines. In general the actions may be any actions that have an effect on the observed state of the environment, e.g. actions configured to adjust any of the sensed parameters described below. These may include actions to adjust the physical or chemical conditions of a manufacturing unit, or actions to control the movement of mechanical parts of a machine or joints of a robot. The actions may include actions imposing operating conditions on a manufacturing unit or machine, or actions that result in changes to settings to adjust, control, or switch on or off the operation of a manufacturing unit or machine.

The rewards or return may relate to a metric of performance of the task. For example in the case of a task that is to manufacture a product the metric may comprise a metric of a quantity of the product that is manufactured, a quality of the product, a speed of production of the product, or to a physical cost of performing the manufacturing task, e.g. a metric of a quantity of energy, materials, or other resources, used to perform the task. In the case of a task that is to control use a resource the matric may comprise any metric of usage of the resource.

In general observations of a state of the environment may comprise any electronic signals representing the functioning of electronic and/or mechanical items of equipment. For example a representation of the state of the environment may be derived from observations made by sensors sensing a state of the manufacturing environment, e.g. sensors sensing a state or configuration of the manufacturing units or machines, or sensors sensing movement of material between the manufacturing units or machines.

As some examples such sensors may be configured to sense mechanical movement or force, pressure, temperature; electrical conditions such as current, voltage, frequency, impedance; quantity, level, flow/movement rate or flow/movement path of one or more materials; physical or chemical conditions e.g. a physical state, shape or configuration or a chemical state such as pH; configurations of the units or machines such as the mechanical configuration of a unit or machine, or valve configurations; image or video sensors to capture image or video observations of the manufacturing units or of the machines or movement; or any other appropriate type of sensor. In the case of a machine such as a robot the observations from the sensors may include observations of position, linear or angular velocity, force, torque or acceleration, or pose of one or more parts of the machine, e.g. data characterizing the current state of the machine or robot or of an item held or processed by the machine or robot. The observations may also include, for example, sensed electronic signals such as motor current or a temperature signal, or image or video data for example from a camera or a LIDAR sensor. Sensors such as these may be part of or located separately from the agent in the environment.

In some other applications the agent may control actions in a real-world environment including items of equipment, for example in a data center or grid mains power or water distribution system, or in a manufacturing plant or service facility. The observations may then relate to operation of the plant or facility. For example the observations may include observations of power or water usage by equipment, or observations of power generation or distribution control, or observations of usage of a resource or of waste production. The agent may control actions in the environment to accomplish the goal of increased efficiency, for example by reducing resource usage, and/or reduce the environmental impact of operations in the environment, for example by reducing waste. The actions may include actions controlling or imposing operating conditions on items of equipment of the plant/facility, and/or actions that result in changes to settings in the operation of the plant/facility e.g. to adjust or turn on/off components of the plant/facility.

In some implementations the environment is the real-world environment of a service facility comprising a plurality of items of electronic equipment, such as a server farm or data center, for example a telecommunications data center, or a computer data center for storing or processing data, or any service facility. The service facility may also include ancillary control equipment that controls an operating environment of the items of equipment, for example environmental control equipment such as temperature control e.g. cooling equipment, or air flow control or air conditioning equipment. The task may comprise a task to control, e.g. minimize, use of a resource, such as a task to control electrical power consumption, or water consumption. The agent may comprise an electronic agent configured to control operation of the items of equipment, or to control operation of the ancillary, e.g. environmental, control equipment.

In general the actions may be any actions that have an effect on the observed state of the environment, e.g. actions configured to adjust any of the sensed parameters described below. These may include actions to control, or to impose operating conditions on, the items of equipment or the ancillary control equipment, e.g. actions that result in changes to settings to adjust, control, or switch on or off the operation of an item of equipment or an item of ancillary control equipment.

In general observations of a state of the environment may comprise any electronic signals representing the functioning of the facility or of equipment in the facility. For example a representation of the state of the environment may be derived from observations made by any sensors sensing a state of a physical environment of the facility or observations made by any sensors sensing a state of one or more items of equipment or one or more items of ancillary control equipment. These include sensors configured to sense electrical conditions such as current, voltage, power or energy; a temperature of the facility; fluid flow, temperature or pressure within the facility or within a cooling system of the facility; or a physical facility configuration such as whether or not a vent is open.

The rewards or return may relate to a metric of performance of the task. For example in the case of a task to control, e.g. minimize, use of a resource, such as a task to control use of electrical power or water, the metric may comprise any metric of use of the resource.

In some implementations the environment is the real-world environment of a power generation facility e.g. a renewable power generation facility such as a solar farm or wind farm. The task may comprise a control task to control power generated by the facility, e.g. to control the delivery of electrical power to a power distribution grid, e.g. to meet demand or to reduce the risk of a mismatch between elements of the grid, or to maximize power generated by the facility. The agent may comprise an electronic agent configured to control the generation of electrical power by the facility or the coupling of generated electrical power into the grid.

The actions may include actions to control an electrical or mechanical configuration of an electrical power generator such as the electrical or mechanical configuration of one or more renewable power generating elements e.g. to control a configuration of a wind turbine or of a solar panel or panels or mirror, or the electrical or mechanical configuration of a rotating electrical power generation machine. Mechanical control actions may, for example, comprise actions that control the conversion of an energy input to an electrical energy output, e.g. an efficiency of the conversion or a degree of coupling of the energy input to the electrical energy output. Electrical control actions may, for example, comprise actions that control one or more of a voltage, current, frequency or phase of electrical power generated.

The rewards or return may relate to a metric of performance of the task. For example in the case of a task to control the delivery of electrical power to the power distribution grid the metric may relate to a measure of power transferred, or to a measure of an electrical mismatch between the power generation facility and the grid such as a voltage, current, frequency or phase mismatch, or to a measure of electrical power or energy loss in the power generation facility. In the case of a task to maximize the delivery of electrical power to the power distribution grid the metric may relate to a measure of electrical power or energy transferred to the grid, or to a measure of electrical power or energy loss in the power generation facility.

In general observations of a state of the environment may comprise any electronic signals representing the electrical or mechanical functioning of power generation equipment in the power generation facility. For example a representation of the state of the environment may be derived from observations made by any sensors sensing a physical or electrical state of equipment in the power generation facility that is generating electrical power, or the physical environment of such equipment, or a condition of ancillary equipment supporting power generation equipment. Such sensors may include sensors configured to sense electrical conditions of the equipment such as current, voltage, power or energy; temperature or cooling of the physical environment; fluid flow; or a physical configuration of the equipment; and observations of an electrical condition of the grid e.g. from local or remote sensors. Observations of a state of the environment may also comprise one or more predictions regarding future conditions of operation of the power generation equipment such as predictions of future wind levels or solar irradiance or predictions of a future electrical condition of the grid.

As another example, the environment may be a chemical synthesis or protein folding environment such that each state is a respective state of a protein chain or of one or more intermediates or precursor chemicals and the agent is a computer system for determining how to fold the protein chain or synthesize the chemical. In this example, the actions are possible folding actions for folding the protein chain or actions for assembling precursor chemicals/intermediates and the result to be achieved may include, e.g., folding the protein so that the protein is stable and so that it achieves a particular biological function or providing a valid synthetic route for the chemical. As another example, the agent may be a mechanical agent that performs or controls the protein folding actions or chemical synthesis steps selected by the system automatically without human interaction. The observations may include direct or indirect observations of a state of the protein or chemical/ intermediates/ precursors and/or may be derived from simulation.

In a similar way the environment may be a drug design environment such that each state is a respective state of a potential pharmachemical drug and the agent is a computer system for determining elements of the pharmachemical drug and/or a synthetic pathway for the pharmachemical drug. The drug/synthesis may be designed based on a reward derived from a target for the drug, for example in simulation. As another example, the agent may be a mechanical agent that performs or controls synthesis of the drug.

In some further applications, the environment is a real-world environment and the agent manages distribution of tasks across computing resources e.g. on a mobile device and/or in a data center. In these implementations, the actions imclude assigning tasks to particular computing resources, and the goal to be achieved can include minimizing the time required to complete a set of tasks using specified computing resources.

As a further example, the actions may include presenting advertisements, the observations may include advertisement impressions or a click-through count or rate, and the reward may characterize previous selections of items or content taken by one or more users. In this example, the goal to be achieved can include maximizing selections of item or content by the one or more users.

In some cases, the observations may include textual or spoken instructions provided to the agent by a third-party (e.g., an operator of the agent). For example, the agent may be an autonomous vehicle, and a user of the autonomous vehicle may provide textual or spoken instructions to the agent (e.g., to navigate to a particular location).

As another unclaimed example the environment may be an electrical, mechanical or electro-mechanical design environment, e.g. an environment in which the design of an electrical, mechanical or electro-mechanical entity is simulated. The simulated environment may be a simulation of a real-world environment in which the entity is intended to work. The task may be to design the entity. The observations may comprise observations that characterize the entity, i.e. observations of a mechanical shape or of an electrical, mechanical, or electro-mechanical configuration of the entity, or observations of parameters or properties of the entity.

The actions may comprise actions that modify the entity e.g. that modify one or more of the observations. The rewards or return may comprise one or more metrics of performance of the design of the entity. For example rewards or return may relate to one or more physical characteristics of the entity such as weight or strength or to one or more electrical characteristics of the entity such as a measure of efficiency at performing a particular function for which the entity is designed. The design process may include outputting the design for manufacture, e.g. in the form of computer executable instructions for manufacturing the entity. The process may include making the entity according to the design. Thus a design of an entity may be optimized, e.g. by reinforcement learning, and then the optimized design output for manufacturing the entity, e.g. as computer executable instructions; an entity with the optimized design may then be manufactured.

As previously described the environment may be a unclaimed simulated environment. Generally in the case of a simulated environment the observations may include simulated versions of one or more of the previously described observations or types of observations and the actions may include simulated versions of one or more of the previously described actions or types of actions. For example the simulated environment may be a motion simulation environment, e.g., a driving simulation or a flight simulation, and the agent may be a simulated vehicle navigating through the motion simulation. In these unclaimed implementations, the actions may be control inputs to control the simulated user or simulated vehicle. Generally the agent may be implemented as one or more computers interacting with the unclaimed simulated environment.

The unclaimed simulated environment may be a simulation of a particular real-world environment and agent. For example, the system may be used to select actions in the simulated environment during training or evaluation of the system and, after training, or evaluation, or both, are complete, may be deployed for controlling a real-world agent in the particular real-world environment that was the subject of the simulation. This can avoid unnecessary wear and tear on and damage to the real-world environment or real-world agent and can allow the control neural network to be trained and evaluated on situations that occur rarely or are difficult or unsafe to re-create in the real-world environment. For example the system may be partly trained using a simulation of a mechanical agent in a simulation of a particular real-world environment, and afterwards deployed to control the real mechanical agent in the particular real-world environment. Thus in such cases the observations of the simulated environment relate to the real-world environment, and the selected actions in the simulated environment relate to actions to be performed by the mechanical agent in the real-world environment.

Optionally, in any of the above implementations, the observation at any given time step may include data from a previous time step that may be beneficial in characterizing the environment, e.g., the action performed at the previous time step, the reward received at the previous time step, and so on.

An example ensemble of discriminator models is described in more detail next.

FIG. 2 illustrates example techniques for determining a measure of disagreement 240 between prediction outputs generated by an ensemble of discriminator models included in the action selection system 100 described above with reference to FIG. 1.

The system 100 uses the discriminator models to determine an unsupervised reward at each of one or more time steps in a sequence of time steps. The system 100 uses unsupervised rewards to train the action selection neural network 120 using reinforcement learning techniques. After training, the system 100 uses the action selection neural network 120 to select actions to be performed by an agent interacting with an environment.

Each discriminator model is configured to process an observation 210 representing a state of the environment at the time step and generate a respective prediction output that predicts which latent the action selection neural network 120 was conditioned on to cause the environment to enter the state characterized by the observation 210. As described above with reference to FIG. 1, the prediction output can include a score distribution over the set of possible latents that defines a respective score for each latent in the set of possible latents.

In order to determine the unsupervised reward at each of the one or more time steps in the sequence of time steps, e.g., the reward defined above by equation (1), the system 100 determines the measure of disagreement 240 between the prediction outputs generated by the ensemble of multiple discriminator models. The system 100 determines the unsupervised reward by determining $r_{DIS}$ in equation (1) based on the measure of disagreement 240.

In some implementations, in order to determine the measure of disagreement 240, the system 100 can determine a combined score distribution 230 for the time step by combining (e.g., averaging) the respective score distributions 220 generated by each discriminator model in the ensemble for the time step. As a particular example, the system 100 can determine the combined score distribution $q_\phi (Z | 0)$ as follows:

$$q_\phi(Z | o_t) = \frac{1}{N} \Sigma_{N=i}^{N} \ q_{\phi_i}(Z | o_t) \qquad (4)$$

where i denotes the ith discriminator model and the sum is over N discriminator models. After determining the combined score distribution, e.g., by using equation (4), the system 100 can determine the measure of disagreement based on the combined score distribution 230 for the time step, and the respective score distribution 220 generated by each discriminator model for the time step.

In some implementations, the system 100 can determine an entropy of each score distribution for the time step. For example, the system 100 can determine an entropy (H) of the combined score distribution 230, e.g., defined by equation (4) above, as follows:

$$H \left[ \frac{1}{N} \Sigma_{N=i}^{N} \ q_{\phi_i}(Z | o_t) \right] \qquad (5)$$

The system 100 can further determine a respective entropy of the respective score distribution 220 generated by each discriminator model for the time step as follows:

$$H \left[ q_{\phi_i}(Z | o_t) \right] \qquad (6)$$

The system can use equation (5) and equation (6) above to determine the measure of disagreement 240 for the time step as a difference between the entropy of the combined score distribution for the time step, and an average of the entropies of the score distributions generated by each discriminator model for the time step. Based on the measure of disagreement 240, the system 100 can determine the reward $r_{DIS}$ for the step as follows:

$$r_{DIS} = \ H \left[ \frac{1}{N} \Sigma_{N=i}^{N} \ q_{\phi_i}(Z | o_t) \right] - \frac{1}{N} \ \Sigma_{N=i}^{N} H \left[ q_{\phi_i}(Z | o_t) \right] \quad (7)$$

If the score distributions over the set of latent variables generated by some, or all, discriminator models in the ensemble are approximately equal, then the two terms in equation (7) are also approximately equal, resulting in a small, or negligible, reward $r_{DIS}$. By contrast, if some, or all, discriminator models generate different score distributions over the set of latent variables, then the reward $r_{DIS}$ is substantially higher. Accordingly, by determining the unsupervised reward based on the measure of disagreement 240 between prediction outputs generated by discriminator models, the system 100 can encourage exploration of new states.

In some implementations, the system 100 can determine the measure of disagreement 240 between the prediction outputs generated by the ensemble of multiple discriminator models by determining a divergence measure for each pair of discriminator models in the ensemble. For example, the system 100 can determine the divergence measure by determining a respective divergence (e.g., Kullback-Leibler divergence) between the score distributions (i.e., over the set of possible latents) generated by each pair of discriminator models. The system 100 can determine the measure of disagreement 240 based on the divergence measures as, e.g., an average, or a median, of divergence measures. Then, the system 100 can determine the unsupervised reward based on the measure of disagreement 240, e.g., in a similar way as described above.

In some implementations, the system 100 can determine the unsupervised reward r also based on a measure of accuracy of the prediction output generated by each discriminator model in the ensemble, e.g., as exemplified by equation (2). In another example, the system 100 can determine the unsupervised reward as an average of accuracies of the prediction outputs.

Example process for training an action selection neural network and an ensemble of discriminator models is described in more detail next.

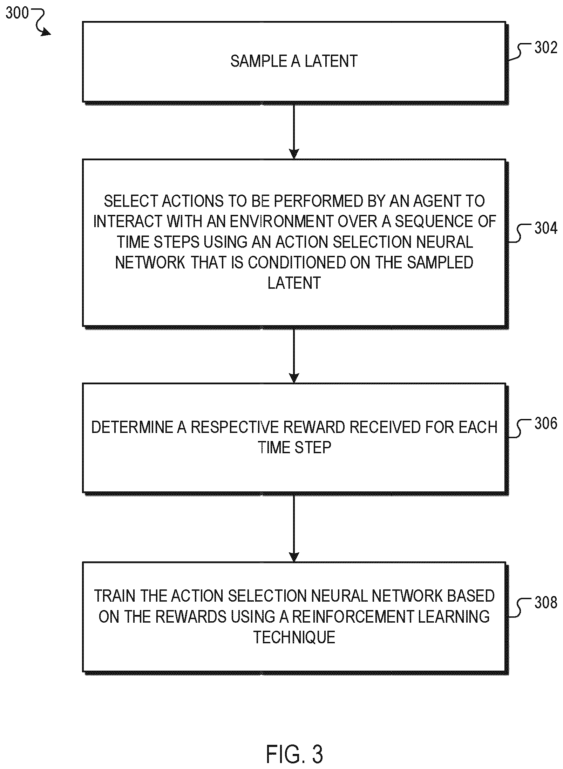

FIG. 3 is a flow diagram of an example process for training an action selection neural network (e.g., the action selection neural network 120 in FIG. 1). For convenience, the process 300 is described as being performed by a system of one or more computers located in one or more locations. For example, an action selection system, e.g., the action selection system 100 in FIG. 1, appropriately programmed in accordance with this specification, can perform the process 300.

The system samples a latent from a set of possible latents (302). In some implementations, the set of possible latents can include only finitely many possible latents. The system can, for example, randomly sample a latent from the set of possible latents.

The system selects actions to be performed by an agent to interact with an environment over a sequence of time steps using an action selection neural network that is conditioned on the sampled latent (304). The system processes an observation characterizing a state of the environment at the time step and the sampled latent using the action selection neural network to generate an action selection output. The action selection output can include, for example, a respective score for each action in a set of possible actions. Then, the system can select the action to be performed at the time step based on the action selection output, e.g., the system can select the action having the highest score.

The system determines a respective reward received for each time step in the sequence of time steps (306). For each of one or more time steps, the system provides an observation representing a state of the environment at the time step to each discriminator model in an ensemble of multiple discriminator models. Then, for each of one or more time steps, the system determines the reward for the time step based at least in part on a measure of disagreement between the prediction outputs generated by the ensemble of multiple discriminator models.

Each discriminator model is configured to process the observation to generate a respective prediction output that predicts which latent from the set of possible latents the action selection neural network was conditioned on to cause the environment to enter the state characterized by the observation. The prediction output can include, for example, a score distribution over the set of possible latents that defines a respective score for each latent in the set of possible latents.

The system trains the action selection neural network based on the rewards using a reinforcement learning technique (308). In some implementations, the system can train the action selection neural network based on an overall reward, e.g., a task reward that characterizes the progress of the agent towards accomplishing a goal, and the rewards based on the measure of disagreement between prediction outputs generated by the discriminator models.

In some implementations, the system can determine the measure of disagreement between the prediction outputs generated by the ensemble of multiple discriminator models based on a combined score distribution over the set of possible latents. For example, the system can determine the combined score distribution for the time step by combining (e.g., averaging) the respective score distribution generated by each discriminator model for the time step.

After determining the combined score distribution for the time step, the system can determine the measure of disagreement based on: (i) the combined score, and (ii) the respective score distribution generated by each discriminator model for the time step. For example, the system can determine the measure of disagreement for the time step by determining an entropy of the combined score distribution. Further, the system can determine a respective entropy of the respective score distribution generated by each discriminator model.

Then, the system can determine the measure of disagreement based on these entropies. As a particular example, the system can determine a difference between: (i) the entropy of the combined score distribution for the time step, and (ii) an average of the entropies of the score distributions generated by each discriminator model for the time step.

In some implementations, the system can determine the reward for the time step based on an accuracy of the prediction output. For example, the system can determine a respective accuracy of the prediction output generated by each discriminator model for the time step. Further, the system can determine the reward for the time step based at least in part on the accuracies of the prediction outputs, e.g., based at least in part on an average of the accuracies of the prediction outputs. In some implementations, the system can determine a reward for the time step based at least in part on a task reward that measures a progress of the agent in accomplishing a task in the environment.

As described above with reference to FIG. 1, the system can train the ensemble of discriminator models. Each discriminator model can have a respective set of discriminator model parameters. In some implementations, respective values of the respective set of discriminator model parameters can be different for each discriminator model. Before training the discriminator models, the system can initialize the respective values of the set of discriminator model parameters of each discriminator model to be different than the set of discriminator model parameters of each other discriminator model.

The system can train each discriminator model on independently sampled batches of training examples from a replay memory. Each training example in the replay memory can include, e.g., (i) a training observation characterizing a state of the environment during a previous interaction of the agent with the environment, and (ii) a target output that defines a latent that the action selection neural network was conditioned on to cause the environment to enter the state characterized by the observation.

After training the action selection neural network, the system uses the action selection neural network to select actions to be performed by a real-world agent interacting with a real-world environment. For example, the agent can be a physical robot in a physical environment, and the system can select actions to perform a particular task, e.g., to move the robot from a first location to a second location in the physical environment.

Example experimental results are described in more detail next.

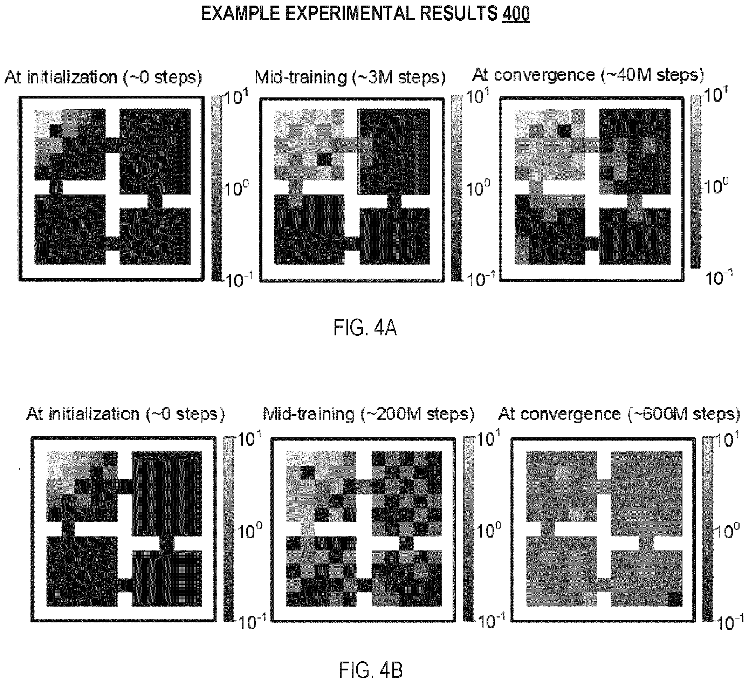

FIG. 4A and FIG. 4B illustrate example experimental results 400 achieved using the action selection system 100. Each panel in FIG. 4A and FIG. 4B illustrates a grid world having four rooms. Each grid world has a total of 104 states (e.g., squares in the grid). The system 100 initializes the first state of the environment as a square in the top left corner.

After initializing the first state, the system 100 samples a latent from the set of possible latents and selects actions to be performed by an agent in the grid world using the action selection neural network 120 conditioned on the sampled latent over a sequence of time steps (e.g., 20 time steps). The sequence of time steps is long enough to reach all but one state, allowing for a total of 103 distinguishable skills. The actions can include, for example, moving left, right, up, down, and staying put. The set of latents includes 128 latent variables.

FIG. 4A illustrates the performance of the system 100 in the absence of unsupervised rewards generated based on a measure of disagreement between prediction outputs generated by an ensemble of discriminator models. As shown, the agent barely enters three out of four rooms, thereby failing to effectively explore the environment. In this case, the agent manages to learn a total of 30 distinct skills.

FIG. 4B illustrates the performance of the system 100 with unsupervised rewards. As shown, the agent manages to effectively explore the environment by entering all four rooms. Furthermore, in this case, the agent learns a triple number of skills, e.g., approximately 90 distinct skills. Therefore, the system 100 described in this specification enables the agent to learn more skills and explore new parts of the environment.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them.

Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. As one example, the processes depicted in the accompanying figures do not necessarily require the particular order shown, or sequential order, to achieve desirable results. In some cases, multitasking and parallel processing may be advantageous.

**Claims**

1. A method (300) performed by one or more data processing apparatus, the method comprising:

   sampling (302) a latent (118) from a set of possible latents;
   selecting (304) actions (102) to be performed by an agent (104) to interact with an environment (106) over a sequence of time steps using an action selection neural network (120) that is conditioned on the sampled latent (118) from the set of possible latents;
   determining (306) a respective reward (109) received for each time step in the sequence of time steps, comprising, for each of one or more time steps:

   providing an observation (110, 210) characterizing a state of the environment (106) at the time step to each discriminator model in an ensemble of multiple discriminator models (150),
   wherein each discriminator model in the ensemble of discriminator models (150) processes the observation (110,210) to generate a respective prediction output (220) that predicts which latent (118) from the set of possible latents the action selection neural network (120) was conditioned on to cause the environment (106) to enter the state **characterized by** the observation (110, 210); and
   determining the reward (109) for the time step based at least in part on a measure of disagreement (240) between the prediction outputs (220) generated by the ensemble of multiple discriminator models (150);

   training (308) the action selection neural network (120) based on the determined rewards (109) using a reinforcement learning technique; and
   after training (308) the action selection neural network (120), using the action selection neural network (120) that is conditioned on a latent (118) sampled from the set of possible latents to select actions (102) to be performed by a real-world agent (104) interacting with a real-world environment (106),
   wherein, when using the action selection neural network (120) to select actions (102) to be performed by the real-world agent (104):

   the real-world agent (104) is a mechanical agent interacting with the real-world environment (106), the action selection neural network (120) that is conditioned on a latent (118) sampled from the set of possible latents selects actions (102) based on observations (110, 210) captured as the mechanical agent interacts interactitrg with the real-world environment (106), and the selected actions (102) are actions to be taken by the mechanical agent in the real-world environment (106);
   the real-world agent (104) is an electronic agent configured to control actions (102) of equipment in a real-world environment (106), ,the action selection neural network (120) that is conditioned on a latent (118) sampled from the set of possible latents selects actions (102) based on observations (110) including data representing the functioning of electronic and/or mechanical equipment in a real-world environment (106), and the selected actions (102) include controlling the electronic and/or mechanical equipment; or
   the real-world agent (104) is configured to manage distribution of tasks across computing resources in a real-world environment (106), ,and the selected actions (102) selected by the action selection network (120) that is conditioned on a latent (118) sampled from the set of possible latents include assigning tasks to particular computing resources based on observations comprising electronic signals representing the functioning of the computing resources in the real-world environment (106).

2. The method of claim 1, wherein for each of the one or more time steps, the prediction output generated by each discriminator model for the time step comprises a respective score distribution over the set of possible latents that defines a respective score for each latent in the set of possible latents.

3. The method of claim 2, further comprising, for each of the one or more time steps, determining the measure of disagreement between the prediction outputs generated by the ensemble of multiple discriminator models, comprising:

   determining a combined score distribution over the set of possible latents for the time step by combining the respective score distribution generated by each discriminator model for the time step; and
   determining the measure of disagreement based on: the combined score distribution for the time step, and the respective score distribution generated by each discriminator model for the time step.

4. The method of claim 3, wherein determining the combined score distribution over the set of possible latents for the time step comprises averaging the score distributions generated by the discriminator models for the time step.

5. The method of any one of claims 3-4, wherein determining the measure of disagreement based on: the combined score distribution for the time step, and the respective score distribution generated by each discriminator model for the time step, comprises:

   determining an entropy of the combined score distribution for the time step;
   determining a respective entropy of the respective score distribution generated by each discriminator model for the time step; and
   determining the measure of disagreement based on the respective entropies of the combined score distribution for the time step and the respective score distribution generated by each discriminator model for the time step.

6. The method of claim 5, wherein determining the measure of disagreement based on the respective entropies of the combined score distribution for the time step and the respective score distribution generated by each discriminator model for the time step comprises:
   determining the measure of disagreement as a difference between: the entropy of the combined score distribution for the time step, and an average of the entropies of the score distributions generated by each discriminator model for the time step.

7. The method of any preceding claim, wherein for each of the one or more time steps, determining the reward for the time step comprises:

   determining a respective accuracy of the prediction output generated by each discriminator model for the time step; and
   determining the reward for the time step based at least in part on the accuracies of the prediction outputs generated by the discriminator models for the time step.

8. The method of claim 7, wherein determining the reward for the time step based at least in part on the accuracies of the prediction outputs generated by the discriminator models for the time step comprises:
   determining the reward based at least in part on an average of the accuracies of the prediction outputs generated by the discriminator models for the time step.

9. The method of any preceding claim, wherein each discriminator model has a respective set of discriminator model parameters, and wherein respective values of the respective set of discriminator model parameters are different for each discriminator model,

   optionally, wherein each discriminator model is trained on independently sampled batches of training examples from a replay memory, and
   further optionally, wherein each training example in the replay memory comprises: a training observation characterizing a state of the environment during a previous interaction of the agent with the environment, and a target output that defines a latent that the action selection neural network was conditioned on to cause the environment to enter the state **characterized by** the observation.

10. The method of claim 9, wherein before being trained, the respective values of the set of discriminator model parameters of each discriminator model are initialized to be different than the set of discriminator model parameters of each other discriminator model.

11. The method of any preceding claim, further comprising, for each time step in the sequence of time steps:
    determining a reward for the time step based at least in part on a task reward that measures a progress of the agent in accomplishing a task in the environment.

12. The method of any preceding claim, wherein the set of possible latents comprises only finitely many possible latents.

13. The method of any preceding claim, wherein selecting actions to be performed by the agent to interact with the environment over the sequence of time steps using the action selection neural network that is conditioned on the sampled latent comprises, for each time step:

    processing an observation characterizing a state of the environment at the time step and the sampled latent using the action selection neural network to generate an action selection output; and
selecting the action to be performed at the time step based on the action selection output,
optionally, wherein for each time step, the action selection output comprises a respective score for each action in a set of possible actions, and
further optionally, wherein for each time step, selecting the action to be performed at the time step based on the action selection output comprises:
selecting the action having the highest score according to the action selection output.

**14.** A system comprising:

one or more computers; and
one or more storage devices communicatively coupled to the one or more computers, wherein the one or more storage devices store instructions that, when executed by the one or more computers, cause the one or more computers to perform the operations of the respective method of any one of claims 1-13.

**15.** One or more non-transitory computer storage media storing instructions that when executed by one or more computers cause the one or more computers to perform the operations of the respective method of any one of claims 1-13.

**Patentansprüche**

**1.** Verfahren (300), das von einem oder mehreren Datenverarbeitungsapparaten durchgeführt wird, wobei das Verfahren umfasst:

Abtasten (302) einer latenten Variablen (118) aus einem Satz möglicher latenter Variablen;
Auswählen (304) von Aktionen (102), die von einem Agenten (104) durchzuführen sind, um mit einer Umgebung (106) über eine Sequenz von Zeitschritten zu interagieren, unter Verwendung eines Aktionsauswahl-neuronalen-Netzwerks (120), das auf die abgetastete latente Variable (118) aus dem Satz möglicher latenter Variablen konditioniert ist;
Bestimmen (306) einer jeweiligen Belohnung (109), die für jeden Zeitschritt in der Sequenz von Zeitschritten empfangen wird, umfassend, für jeden von einem oder mehreren Zeitschritten:

Bereitstellen einer Beobachtung (110, 210), die einen Zustand der Umgebung (106) zum Zeitschritt kennzeichnet, für jedes Diskriminatormodell in einer Anordnung von mehreren Diskriminatormodellen (150), wobei jedes Diskriminatormodell in der Anordnung von Diskriminatormodellen (150) die Beobachtung (110, 210) verarbeitet, um eine jeweilige Vorhersageausgabe (220) zu erzeugen, die vorhersagt, auf welche latente Variable (118) aus dem Satz möglicher latenter Variablen das Aktionsauswahlneuronale-Netzwerk (120) konditioniert war, um zu bewirken, dass die Umgebung (106) in den durch die Beobachtung (110, 210) gekennzeichneten Zustand eintritt; und
Bestimmen der Belohnung (109) für den Zeitschritt wenigstens teilweise basierend auf einem Maß der Nichtübereinstimmung (240) zwischen den von der Anordnug von mehreren Diskriminatormodellen (150) erzeugten Vorhersageausgaben (220);
Trainieren (308) des Aktionsauswahl-neuronalen-Netzwerks (120) basierend auf den bestimmten Belohnungen (109) unter Verwendung einer Verstärkungslerntechnik; und
nach dem Trainieren (308) des Aktionsauswahl-neuronalen-Netzwerks (120), Verwenden des Aktionsauswahl-neuronalen-Netzwerks (120), das auf eine aus dem Satz möglicher latenter Variablen abgetastete latente Variable (118) konditioniert ist, um Aktionen (102) auszuwählen, die von einem realen Agenten (104) durchzuführen sind, der mit einer realen Umgebung (106) interagiert,
wobei, bei der Verwendung des Aktionsauswahl-neuronalen-Netzwerks (120) zur Auswahl von Aktionen (102), die vom realen Agenten (104) durchzuführen sind:

der reale Agent (104) ein mechanischer Agent ist, der mit der realen Umgebung (106) interagiert, das Aktionsauswahlneuronale-Netzwerk (120), das auf eine aus dem Satz möglicher latenter Variablen abgetastete latente Variable (118) konditioniert ist, Aktionen (102) basierend auf Beobachtungen (110, 210) auswählt, die erfasst werden, während der mechanische Agent mit der realen Umgebung (106) interagiert, und die ausgewählten Aktionen (102) Aktionen sind, die vom mechanischen Agenten in der realen Umgebung (106) vorzunehmen sind;

der reale Agent (104) ein elektronischer Agent ist, der konfiguriert ist, um Aktionen (102) von Ausrüstung in einer realen Umgebung (106) zu steuern, das Aktionsauswahl-neuronale-Netzwerk (120), das auf eine aus dem Satz möglicher latenter Variablen abgetastete latente Variable (118) konditioniert ist, Aktionen (102) basierend auf Beobachtungen (110) auswählt, die Daten beinhalten, die die Funktionsweise von elektronischer und/oder mechanischer Ausrüstung in einer realen Umgebung (106) darstellen, und die ausgewählten Aktionen (102) das Steuern der elektronischen und/oder mechanischen Ausrüstung beinhalten;

oder der reale Agent (104) konfiguriert ist, um die Verteilung von Aufgaben über Rechenressourcen in einer realen Umgebung (106) zu verwalten, und die vom Aktionsauswahlnetzwerk (120), das auf eine aus dem Satz möglicher latenter Variablen abgetastete latente Variable (118) konditioniert ist, ausgewählten Aktionen (102) das Zuweisen von Aufgaben an bestimmte Rechenressourcen basierend auf Beobachtungen beinhalten, die elektronische Signale umfassen, die die Funktionsweise der Rechenressourcen in der realen Umgebung (106) darstellen.

2. Verfahren nach Anspruch 1, wobei für jeden des einen oder der mehreren Zeitschritte die von jedem Diskriminatormodell für den Zeitschritt erzeugte Vorhersageausgabe eine jeweilige Score-Verteilung über den Satz möglicher latenter Variablen umfasst, die für jede latente Variable im Satz möglicher latenter Variablen einen jeweiligen Score definiert.

3. Verfahren nach Anspruch 2, ferner umfassend, für jeden des einen oder der mehreren Zeitschritte, das Bestimmen des Maßes der Nichtübereinstimmung zwischen den von der Anordnung von mehreren Diskriminatormodellen erzeugten Vorhersageausgaben, umfassend:

Bestimmen einer kombinierten Score-Verteilung über den Satz möglicher latenter Variablen für den Zeitschritt durch Kombinieren der von jedem Diskriminatormodell für den Zeitschritt erzeugten jeweiligen Score-Verteilung; und

Bestimmen des Maßes der Nichtübereinstimmung basierend auf: der kombinierten Score-Verteilung für den Zeitschritt und der von jedem Diskriminatormodell für den Zeitschritt erzeugten jeweiligen Score-Verteilung.

4. Verfahren nach Anspruch 3, wobei das Bestimmen der kombinierten Score-Verteilung über den Satz möglicher latenter Variablen für den Zeitschritt das Mitteln der von den Diskriminatormodellen für den Zeitschritt erzeugten Score-Verteilungen umfasst.

5. Verfahren nach einem der Ansprüche 3-4, wobei das Bestimmen des Maßes der Nichtübereinstimmung basierend auf: der kombinierten Score-Verteilung für den Zeitschritt und der von jedem Diskriminatormodell für den Zeitschritt erzeugten jeweiligen Score-Verteilung, umfasst:

Bestimmen einer Entropie der kombinierten Score-Verteilung für den Zeitschritt;

Bestimmen einer jeweiligen Entropie der von jedem Diskriminatormodell für den Zeitschritt erzeugten jeweiligen Score-Verteilung; und

Bestimmen des Maßes der Nichtübereinstimmung basierend auf den jeweiligen Entropien der kombinierten Score-Verteilung für den Zeitschritt und der von jedem Diskriminatormodell für den Zeitschritt erzeugten jeweiligen Score-Verteilung.

6. Verfahren nach Anspruch 5, wobei das Bestimmen des Maßes der Nichtübereinstimmung basierend auf den jeweiligen Entropien der kombinierten Score-Verteilung für den Zeitschritt und der von jedem Diskriminatormodell für den Zeitschritt erzeugten jeweiligen Score-Verteilung umfasst:
Bestimmen des Maßes der Nichtübereinstimmung als eine Differenz zwischen: der Entropie der kombinierten Score-Verteilung für den Zeitschritt und einem Durchschnitt der Entropien der von jedem Diskriminatormodell für den Zeitschritt erzeugten Score-Verteilungen.

7. Verfahren nach einem der vorhergehenden Ansprüche, wobei für jeden des einen oder der mehreren Zeitschritte das Bestimmen der Belohnung für den Zeitschritt umfasst:

Bestimmen einer jeweiligen Genauigkeit der von jedem Diskriminatormodell für den Zeitschritt erzeugten Vorhersageausgabe; und

Bestimmen der Belohnung für den Zeitschritt wenigstens teilweise basierend auf den Genauigkeiten der von den Diskriminatormodellen für den Zeitschritt erzeugten Vorhersageausgaben.

8. Verfahren nach Anspruch 7, wobei das Bestimmen der Belohnung für den Zeitschritt wenigstens teilweise basierend auf den Genauigkeiten der von den Diskriminatormodellen für den Zeitschritt erzeugten Vorhersageausgaben umfasst:
Bestimmen der Belohnung wenigstens teilweise basierend auf einem Durchschnitt der Genauigkeiten der von den Diskriminatormodellen für den Zeitschritt erzeugten Vorhersageausgaben.

9. Verfahren nach einem der vorhergehenden Ansprüche, wobei jedes Diskriminatormodell einen jeweiligen Satz von Diskriminatormodellparametern aufweist, und wobei jeweilige Werte des jeweiligen Satzes von Diskriminatormodellparametern für jedes Diskriminatormodell unterschiedlich sind,

optional, wobei jedes Diskriminatormodell an unabhängig abgetasteten Batches von Trainingsbeispielen aus einem Replay-Speicher trainiert wird, und
ferner optional, wobei jedes Trainingsbeispiel im Replay-Speicher umfasst: eine Trainingsbeobachtung, die einen Zustand der Umgebung während einer vorherigen Interaktion des Agenten mit der Umgebung kennzeichnet, und eine Zielausgabe, die eine latente Variable definiert, auf die das Aktionsauswahlneuronale-Netzwerk konditioniert war, um zu bewirken, dass die Umgebung in den durch die Beobachtung gekennzeichneten Zustand eintritt.

10. Verfahren nach Anspruch 9, wobei vor dem Trainieren die jeweiligen Werte des Satzes von Diskriminatormodellparametern jedes Diskriminatormodells so initialisiert werden, dass sie sich von dem Satz von Diskriminatormodellparametern jedes anderen Diskriminatormodells unterscheiden.

11. Verfahren nach einem der vorhergehenden Ansprüche, ferner umfassend, für jeden Zeitschritt in der Sequenz von Zeitschritten:
Bestimmen einer Belohnung für den Zeitschritt wenigstens teilweise basierend auf einer Aufgabenbelohnung, die einen Fortschritt des Agenten bei der Erfüllung einer Aufgabe in der Umgebung misst.

12. Verfahren nach einem der vorhergehenden Ansprüche, wobei der Satz möglicher latenter Variablen nur endlich viele mögliche latente Variablen umfasst.

13. Verfahren nach einem der vorhergehenden Ansprüche, wobei das Auswählen von Aktionen, die vom Agenten durchzuführen sind, um mit der Umgebung über die Sequenz von Zeitschritten zu interagieren, unter Verwendung des Aktionsauswahl-neuronalen-Netzwerks, das auf die abgetastete latente Variable konditioniert ist, für jeden Zeitschritt umfasst:

Verarbeiten einer Beobachtung, die einen Zustand der Umgebung zum Zeitschritt kennzeichnet, und der abgetasteten latenten Variablen unter Verwendung des Aktionsauswahl-neuronalen-Netzwerks, um eine Aktionsausgabe zu erzeugen; und
Auswählen der zum Zeitschritt durchzuführenden Aktion basierend auf der Aktionsausgabe,
optional, wobei für jeden Zeitschritt die Aktionsausgabe einen jeweiligen Score für jede Aktion in einem Satz möglicher Aktionen umfasst, und
ferner optional, wobei für jeden Zeitschritt das Auswählen der zum Zeitschritt durchzuführenden Aktion basierend auf der Aktionsausgabe umfasst:
Auswählen der Aktion mit dem höchsten Score gemäß der Aktionsausgabe.

14. System, umfassend:

einen oder mehrere Computer; und
eine oder mehrere Speichervorrichtungen, die kommunikativ mit dem einen oder den mehreren Computern gekoppelt sind, wobei die eine oder die mehreren Speichervorrichtungen Anweisungen speichern, die, wenn sie von dem einen oder den mehreren Computern ausgeführt werden, den einen oder die mehreren Computer veranlassen, die Operationen des jeweiligen Verfahrens nach einem der Ansprüche 1-13 durchzuführen.

15. Ein oder mehrere nichttransitorische Computerspeichermedien, die Anweisungen speichern, die, wenn sie von einem oder mehreren Computern ausgeführt werden, den einen oder die mehreren Computer veranlassen, die Operationen des jeweiligen Verfahrens nach einem der Ansprüche 1-13 durchzuführen.

**Revendications**

1. Procédé (300) réalisé par un ou plusieurs appareils de traitement de données, le procédé comprenant :

l'échantillonnage (302) d'une latente (118) à partir d'un ensemble de latentes possibles ;
la sélection (304) d'actions (102) à réaliser par un agent (104) pour interagir avec un environnement (106) sur une séquence de pas de temps à l'aide d'un réseau neuronal de sélection d'actions (120) qui est conditionné sur la latente échantillonnée (118) à partir de l'ensemble de latentes possibles ;
la détermination (306) d'une récompense respective (109) reçue pour chaque pas de temps dans la séquence de pas de temps, comprenant, pour chacun d'un ou de plusieurs pas de temps :

la fourniture d'une observation (110, 210) caractérisant un état de l'environnement (106) au pas de temps à chaque modèle discriminateur dans un ensemble de plusieurs modèles discriminateurs (150),
dans lequel chaque modèle discriminateur dans l'ensemble de modèles discriminateurs (150) traite l'observation (110, 210) pour générer une sortie de prédiction respective (220) qui prédit sur quelle latente (118) de l'ensemble de latentes possibles le réseau neuronal de sélection d'actions (120) a été conditionné pour amener l'environnement (106) à entrer dans l'état **caractérisé par** l'observation (110, 210) ; et
la détermination de la récompense (109) pour le pas de temps sur la base au moins en partie d'une mesure de désaccord (240) entre les sorties de prédiction (220) générées par l'ensemble de plusieurs modèles discriminateurs (150) ;
l'entraînement (308) du réseau neuronal de sélection d'actions (120) sur la base des récompenses déterminées (109) à l'aide d'une technique d'apprentissage par renforcement ; et
après l'entraînement (308) du réseau neuronal de sélection d'actions (120), à l'aide du réseau neuronal de sélection d'actions (120) conditionné sur une latente (118) échantillonnée à partir de l'ensemble de latentes possibles pour sélectionner des actions (102) à réaliser par un agent du monde réel (104) interagissant avec un environnement du monde réel (106),
dans lequel, lors de l'utilisation du réseau neuronal de sélection d'actions (120) pour sélectionner des actions (102) à réaliser par l'agent du monde réel (104) :

l'agent du monde réel (104) est un agent mécanique interagissant avec l'environnement du monde réel (106), le réseau neuronal de sélection d'actions (120) conditionné sur une latente (118) échantillonnée à partir de l'ensemble des latentes possibles sélectionne des actions (102) sur la base d'observations (110, 210) capturées lorsque l'agent mécanique interagit avec l'environnement du monde réel (106), et les actions sélectionnées (102) sont des actions à entreprendre par l'agent mécanique dans l'environnement du monde réel (106) ;
l'agent du monde réel (104) est un agent électronique configuré pour commandes des actions (102) d'équipement dans un environnement du monde réel (106), le réseau neuronal de sélection d'actions (120) conditionné sur une latente (118) échantillonnée à partir de l'ensemble de latentes possibles sélectionne des actions (102) sur la base d'observations (110) comportant des données représentant le fonctionnement de l'équipement électronique et/ou mécanique dans un environnement du monde réel (106), et les actions sélectionnées (102) comportent la commande de l'équipement électronique et/ou mécanique ; ou l'agent du monde réel (104) est configuré pour gérer la distribution de tâches entre des ressources informatiques dans un environnement du monde réel (106), et les actions sélectionnées (102) sélectionnées par le réseau de sélection d'actions (120) conditionné sur une latente (118) échantillonnée à partir de l'ensemble de latentes possibles comportent l'attribution de tâches à des ressources informatiques particulières sur la base d'observations comprenant des signaux électroniques représentant le fonctionnement des ressources informatiques dans l'environnement du monde réel (106).

2. Procédé selon la revendication 1, dans lequel pour chacun des un ou plusieurs pas de temps, la sortie de prédiction générée par chaque modèle discriminateur pour le pas de temps comprend une distribution de score respective sur l'ensemble de latentes possibles qui définit un score respectif pour chaque latente dans l'ensemble de latentes possibles.

3. Procédé selon la revendication 2, comprenant également, pour chacun des un ou plusieurs pas de temps, la détermination de la mesure de désaccord entre les sorties de prédiction générées par l'ensemble de plusieurs modèles discriminateurs, comprenant :

la détermination d'une distribution de score combinée sur l'ensemble de latentes possibles pour le pas de temps en combinant la distribution de score respective générée par chaque modèle discriminateur pour le pas de temps ; et

la détermination de la mesure de désaccord sur la base de : la distribution de score combinée pour le pas de temps, et la distribution de score respective générée par chaque modèle discriminateur pour le pas de temps.

4. Procédé selon la revendication 3, dans lequel la détermination de la distribution de score combinée sur l'ensemble de latentes possibles pour le pas de temps comprend le fait de faire la moyenne des distributions de score générées par les modèles discriminateurs pour le pas de temps.

5. Procédé selon l'une quelconque des revendication 3 à 4, dans lequel la détermination de la mesure de désaccord sur la base de : la distribution de score combinée pour le pas de temps, et la distribution de score respective générée par chaque modèle discriminateur pour le pas de temps, comprend :

la détermination d'une entropie de la distribution de score combinée pour le pas de temps ;

la détermination d'une entropie respective de la distribution de score respective générée par chaque modèle discriminateur pour le pas de temps ; et

la détermination de la mesure de désaccord sur la base des entropies respectives de la distribution de score combinée pour le pas de temps, et la distribution de score respective générée par chaque modèle discriminateur pour le pas de temps.

6. Procédé selon la revendication 5, dans lequel la détermination de la mesure de désaccord sur la base des entropies respectives de la distribution de score combinée pour le pas de temps, et la distribution de score respective générée par chaque modèle discriminateur pour le pas de temps comprend :

la détermination de la mesure de désaccord en tant que différence entre : l'entropie de la distribution de score combinée pour le pas de temps, et une moyenne des entropies des distributions de score générées par chaque modèle discriminateur pour le pas de temps.

7. Procédé selon une quelconque revendication précédente, dans lequel, pour chacun des un ou plusieurs pas de temps, la détermination de la récompense pour le pas de temps comprend :

la détermination d'une exactitude respective de la sortie de prédiction générée par chaque modèle discriminateur pour le pas de temps ; et

la détermination de la récompense pour le pas de temps sur la base au moins en partie des exactitudes des sorties de prédiction générées par les modèles discriminateurs pour le pas de temps.

8. Procédé selon la revendication 7, dans lequel la détermination de la récompense pour le pas de temps sur la base au moins en partie des exactitudes des sorties de prédiction générées par les modèles discriminateurs pour le pas de temps comprend :

la détermination de la récompense sur la base au moins en partie d'une moyenne des exactitudes des sorties de prédiction générées par les modèles discriminateurs pour le pas de temps.

9. Procédé selon une quelconque revendication précédente, dans lequel chaque modèle discriminateur présente un ensemble respectif de paramètres de modèle discriminateur, et dans lequel les valeurs respectives de l'ensemble respectif de paramètres de modèle discriminateur sont différentes pour chaque modèle discriminateur,

éventuellement, dans lequel chaque modèle discriminateur est entraîné sur des lots échantillonnés d'exemples d'entraînement indépendamment à partir d'une mémoire de relecture, et

éventuellement également, dans lequel chaque exemple d'entraînement dans la mémoire de relecture comprend : une observation d'entraînement caractérisant un état de l'environnement pendant une interaction précédente de l'agent avec l'environnement, et une sortie cible qui définit une latente sur laquelle le réseau neuronal de sélection d'actions a été conditionné pour amener l'environnement à entrer dans l'état **caractérisé par** l'observation.

10. Procédé selon la revendication 9, dans lequel avant leur entraînement, les valeurs respectives de l'ensemble de paramètres de modèle discriminateur de chaque modèle discriminateur sont initialisées pour être différentes de l'ensemble de paramètres de modèle discriminateur de chaque autre modèle discriminateur.

11. Procédé selon une quelconque revendication précédente, comprenant également, pour chaque pas de temps dans la séquence de pas de temps :
la détermination d'une récompense pour le pas de temps sur la base au moins en partie d'une récompense de tâche qui mesure la progression de l'agent dans l'accomplissement d'une tâche dans l'environnement.

12. Procédé selon une quelconque revendication précédente, dans lequel l'ensemble de latentes possibles ne comprend qu'un nombre fini de latentes possibles.

13. Procédé selon une quelconque revendication précédente, dans lequel la sélection d'actions à réaliser par l'agent pour interagir avec l'environnement sur la séquence de pas de temps à l'aide du réseau neuronal de sélection d'actions conditionné sur la latente échantillonnée comprend, pour chaque pas de temps :

le traitement d'une observation caractérisant un état de l'environnement au niveau du pas de temps et de la latente échantillonnée à l'aide du réseau neuronal de sélection d'actions pour générer une sortie de sélection d'actions ; et
la sélection de l'action à réaliser au niveau du pas de temps sur la base de la sortie de sélection d'actions, éventuellement, dans lequel pour chaque pas de temps, la sortie de sélection d'actions comprend un score respectif pour chaque action dans un ensemble d'actions possibles, et
éventuellement également, dans lequel pour chaque pas de temps, la sélection de l'action à réaliser au niveau du pas de temps sur la base de la sortie de sélection d'actions comprend :
la sélection de l'action présentant le score le plus élevé selon la sortie de sélection d'actions.

14. Système comprenant :

un ou plusieurs ordinateurs ; et
un ou plusieurs dispositifs de stockage couplés en communication aux un ou plusieurs ordinateurs, dans lequel les un ou plusieurs dispositifs de stockage stockent des instructions qui, lorsqu'elles sont exécutées par les un ou plusieurs ordinateurs, amènent les un ou plusieurs ordinateurs à réaliser les opérations du procédé respectif selon l'une quelconque des revendications 1 à 13.

15. Un ou plusieurs supports de stockage informatique non transitoire stockant des instructions qui, lorsqu'elles sont exécutées par un ou plusieurs ordinateurs, amènent les un ou plusieurs ordinateurs à réaliser les opérations du procédé respectif selon l'une quelconque des revendications 1 à 13.

ACTION SELECTION SYSTEM 100

ACTION SELECTION
OUTPUT
122

ACTION
102

AGENT
104

ENVIRONMENT
106

OBSERVATION
110

TASK REWARD
108

ACTION SELECTION
NEURAL NETWORK
120

LATENT
118

DISCRIMINATOR MODELS
150

UNSUPERVISED REWARD
109

TRAINING ENGINE
112

REPLAY
MEMORY
114

FIG. 1

# DETERMINING A MEASURE OF DISAGREEMENT

OBSERVATION
210

SCORE DISTRIBUTION OF
EACH DISCRIMINATOR
MODEL
220

COMBINED SCORE
DISTRIBUTION
230

MEASURE OF
DISAGREEMENT
240

FIG. 2

300

SAMPLE A LATENT — 302

SELECT ACTIONS TO BE PERFORMED BY AN AGENT TO INTERACT WITH AN ENVIRONMENT OVER A SEQUENCE OF TIME STEPS USING AN ACTION SELECTION NEURAL NETWORK THAT IS CONDITIONED ON THE SAMPLED LATENT — 304

DETERMINE A RESPECTIVE REWARD RECEIVED FOR EACH TIME STEP — 306

TRAIN THE ACTION SELECTION NEURAL NETWORK BASED ON THE REWARDS USING A REINFORCEMENT LEARNING TECHNIQUE — 308

FIG. 3

# EXAMPLE EXPERIMENTAL RESULTS 400

At initialization (~0 steps)    Mid-training (~3M steps)    At convergence (~40M steps)

## FIG. 4A

At initialization (~0 steps)    Mid-training (~200M steps)    At convergence (~600M steps)

## FIG. 4B

EP 4 305 556 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ANNIE S. CHEN**. Batch Exploration with Examples for Scalable Robotic Reinforcement Learning. Cornell University Library, 23 April 2021, vol. 201